# EUROPEAN PATENT APPLICATION

(11) **EP 2 642 142 A1**
(43) Date of publication of application: **25.09.2013**
(21) Application number: 13160121.3
(22) Date of filing: 20.03.2013
(51) Int. Cl.: F16C 23/04, F16C 33/26, B63H 23/32

(54) **Self-aligning sliding bearing**

(30) Priority: 22.03.2012 IT GE20120033
(71) Applicant: Pedone, Alessandro, 98000 Monaco (MC)
(72) Inventor: Pedone, Alessandro, 98000 Monaco (MC)
(74) Representative: Porsia, Attilio

(57) **Abstract**

A self-aligning sliding bearing for rotating shafts (2) comprising a support element (1) provided with a cylindrical hole (3) for housing the bearing; a cylindrical shell (4) inserted with slight radial clearance in the hole (3) of said support element (1); said shell (4) being provided in the central part thereof with a circumferential groove (5) for housing a guiding strip (6) that rests with the outer perimeter thereof against the wall of the hole (3) of said support (1); said shell (4) also being provided with three or more rows of peripherally equidistant pins (9) aligned according to the directrices of said cylindrical shell (4), projecting radially from the inner wall of said shell (4) to rest against said rotating shaft (2), and means (11) in said circumferential groove (5) to prevent said shell (4) from rotating with respect to said support element (1). According to a preferred embodiment, the bearing also comprises staves (10) constituted by strips with a rectangular or substantially rectangular section having a length greater than the length of said cylindrical hole (3) of said support element (1).

## Description

The present invention relates to the sliding bearings used to support propeller shafts in the nautical sector and rotating shafts in the industrial field (large water movement machines, hydroelectric turbines, pumps, etc.).

Sliding bearings are divided into two categories, water lubricated and oil and/or grease bath lubricated.

Water lubricated bearings are constituted by a cylindrical outer shell that can be made of metal or resin and are coated internally by a layer of synthetic rubber in contact with the rotating shaft. The rubber inner surface is grooved in order to allow passage of the lubrication water. There are also water lubricated bearings made completely of thermoplastic resins with low friction coefficient.

Oil and/or grease bath lubricated bearings (bushings) are generally made of white metal or other alloys with low friction coefficient.

Water lubricated bearings are widely used in the marine sector, so much so that the commercial sizes (internal diameter/external diameter/length) are standardized, while those made of metal are made to measure.

In order for the bearings to operate correctly, it is essential that the rotating shaft or the propeller shaft be perfectly aligned: i.e., the neutral axis of the rotating shaft or of the propeller shaft must be positioned as parallel as possible with respect to the neutral axis of the support that houses the bearings.

In practice, it is very difficult and costly to align the supports perfectly. In the marine sector, the supports are attached with resin, bolted or welded to the hull (which is a very elastic structure), and their position cannot be adjusted. Therefore, most marine craft equipped with propeller shaft have chronic problems of early wear of the bearings. Bearings housed in supports that are not perfectly aligned are subject to rapid wear along the edges due to the noteworthy load weighing on the limited support surface; irregular wear of the bearing causes an increase in clearance, with consequent vibration and noise of the propeller shaft. Incorrect alignment also causes consumption of the propeller shaft.

Analogous problems are encountered in the bushings that support the rotating shafts of large water movement machines.

Water lubricated bearings with inner lining made of rubber are widely used, as the elasticity of the rubber allows the propeller shafts to be mounted even in the case of alignment errors of the supports. Vice versa, as bearings made of metal or thermoplastic resins are rigid, they require much more accurate alignment, or it would be impossible to insert the rotating shaft between one support and the other.

In any case, the operation to replace worn bearings, especially water lubricated bearings with a metal shell, is particularly labour-intensive. The bearings are housed in the supports with precise coupling, and therefore the salt water oxidizes the metal surface, making it almost impossible to extract the bearing without the aid of specific extractors. Often, not even these extractors suffice and therefore the old bearing must be destroyed inside the housing.

Therefore, the object of the present invention is to produce a self-aligning sliding bearing adapted to overcome the problems of prior art bearings.

According to the invention, this object is achieved with a bearing as claimed in claim 1.

Further objects and advantages of the present invention will be more apparent from the following description of some preferred embodiments thereof, made with reference to the accompanying drawings, wherein:
Fig. 1 is a side view, with parts in section, of a support for a propeller shaft provided with a bearing according to the invention;

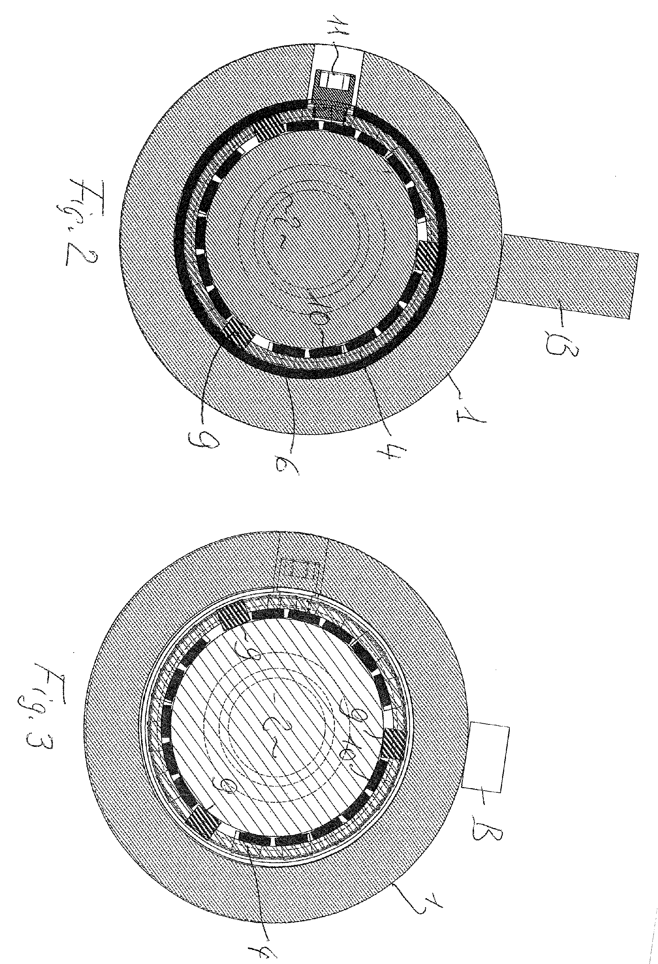

Fig. 2 is a cross sectional view, according to the plane of the line II-II of Fig. 1;
Fig. 3 is a cross sectional view, according to the plane of the line III-III of Fig. 1;
Fig. 4 is a cross sectional view, according to the plane of the line IV-IV of Fig. 1;
Fig. 5 is an axonometric view of the cylindrical shell of the bearing according to the invention;
Fig. 6 is a view, with parts in section, of a further embodiment of the bearing according to the invention.

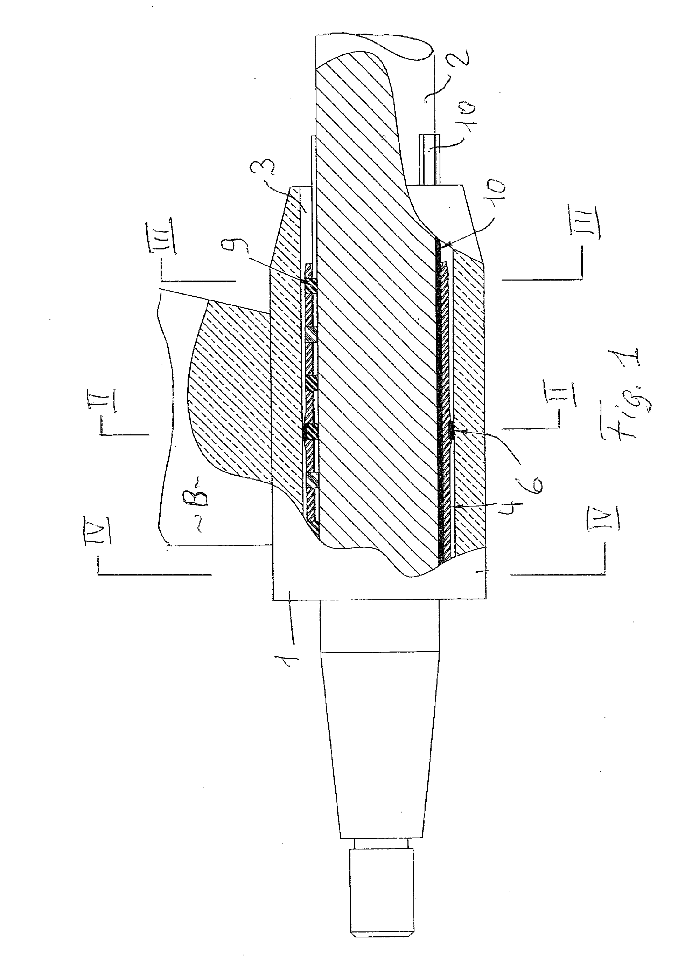

With reference to the drawings, and with particular reference firstly to Fig. 1 thereof, the letter B indicates the arm carrying the support element 1 of the propeller shaft 2. The support element 1 has a through hole 3 in which there is housed a cylindrical shell 4 having a slightly smaller external diameter (approximately 2 mm or even more according to the dimensions of the shaft 2 and of the housing hole 3) than the diameter of the hole 3 in which it is housed. The shell 4 can be made of metal or synthetic resins.

The length of the shell 4 can vary from 1 to 4 times the diameter of the shaft 2 according to the type of material used to support the same shaft 2.

In conformity with the embodiment illustrated in Fig. 1, the inner diameter of the shell 4 is slightly larger with respect to the diameter of the rotating shaft 2, and indicatively this difference in diameter can be approximately 6 mm.

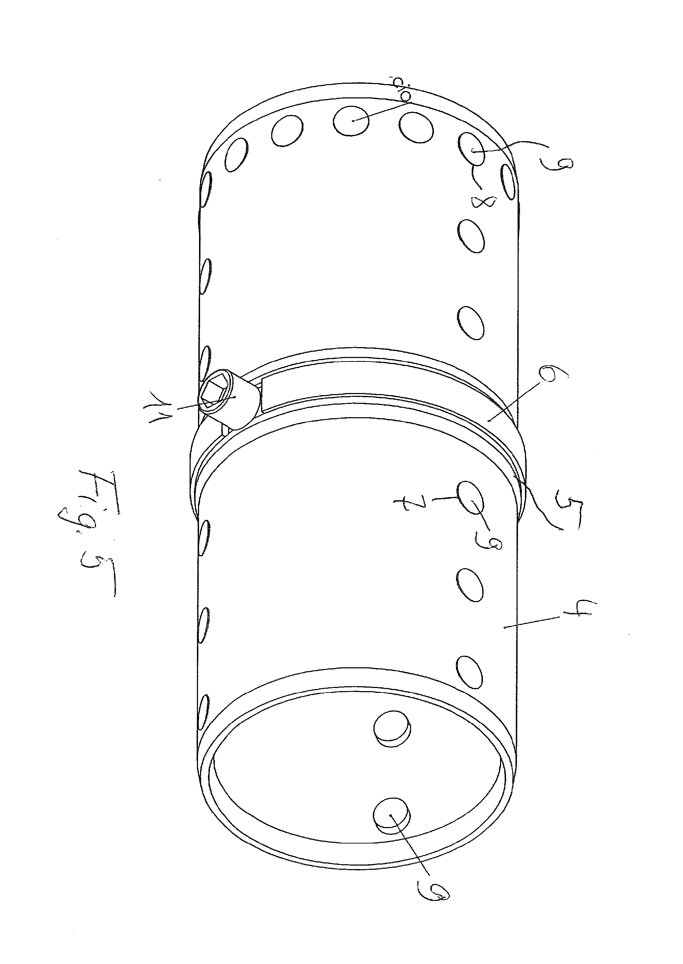

With reference now to Fig. 5, the shell 4 has in the central part thereof an annular groove 5 adapted to house a guiding strip 6 made of fabric impregnated with synthetic resin. The guiding strip 6, formed by a split ring, is housed between the groove 5 of the shell 4 and the inner surface of the housing hole 3 and performs, in fact, the same function as a spherical support. The guiding strip 6 maintains the shell 4 inside the hole 3 without clearance and enables the shell 4 to be oriented angularly always positioned parallel to the axis of the rotating shaft.

The inner surface of the shell 4 in contact on the rotating shaft 2 can be made of different types of material according to type of application for which the bearing is intended (white metal, acetal copolymer, cast iron, synthetic rubber, etc.).

In the embodiment illustrated in Figs. 1 and 5, the shell 4 has three or more rows of holes 7 angularly equidistant to one another which extend along the directrices of the cylindrical shell 4. These holes 7 are spaced apart regularly and their dimensions are a function of the dimension of the shaft 2. On one edge of the shell 4 there is produced a series of holes 8 that extend along the whole of the circumference of the shell 4 so that the space between one hole and the other is less than the width of the stave 10. In the holes 7 and 8 of the shell 4 there are screwed and locked threaded cylinders or pins 9 projecting inside the same shell 4. These pins 9 are preferably made of acetal copolymer of other resins. Once the pins 9 have been locked in the shell 4, the internally projecting part thereof is turned with a certain clearance with respect to the shaft 2. The outside is turned to the diameter of the shell 4 so as to make the surface smooth.

The numeral 10 indicates staves formed by strips with a substantially rectangular section having a length greater than the length of the shell 4. These staves 10 are made of an anti-friction material, for example anti-friction metals or anti-friction resins, such as an acetal copolymer.

The staves 10 are inserted in the space between the inner wall of the shell 4 and the outer wall of the shaft 2, and are limited to groups of 4 or 5 or also more in the compartments delimited between the rows of pins 9 screwed into the holes 7. As stated, said staves 10 have a substantially rectangular section and their thickness varies according to the diameters of the shell, for example from 2.5 to 3 and 4 mm and their width varies, for example, from 6 to 15 mm.

The length of the staves 10 is slightly greater than the length of the shell 4 in order to be easily grasped to be removed and replaced periodically without the need to disassemble the propeller shaft 2, the propeller or any other body (turbines, flanges,, etc.).

The function of the pins 9 arranged longitudinally in the holes 7 and frontally in the holes 8 of an edge of the bearing is to create the lateral anti-rotation and the front stop for the staves, which will subsequently be inserted side by side between the rotating shaft 2 and the inside of the shell 4. Moreover, as the pins 9 are spaced from one another, they ensure the presence and the outflow of the lubricating liquid of the staves 10.

To prevent the staves 10 from exiting longitudinally from the part opposite that of the front stop, formed by
the series of pins 9 fixed radially in the holes 8, a front stop flange can be fitted on the rotary shaft or on the propeller shaft, fixed with clamping grub screws.

As the shell 4 is self-orienting, it is not subjected to high rotation stresses, as the friction of the staves 10 is minimum, given that the staves 10 are loaded uniformly along their entire length. Therefore, it is sufficient to screw the retaining bolt 11 on the shell 4 to prevent rotation of the shell 4.

In any case, the shell 4 of the invention can also be made completely of anti-friction metals or resins. The pins 9 made of anti-friction material (projecting slightly inside the shell 4) facilitate creation of the lubricating film between the rotating shaft 2 and the inner surface of the shell 4. The pins 9 help to make the shell 4 operate parallel with respect to the shaft 2. The shell 4 of the bearing remains in any case self-aligning, due to the central guiding strip 6.

The bearing of the invention can also be used in oil bath casings, by producing, in addition to the groove 5 for the guiding strip 6, also an O-ring groove on the outer part of the bearing to prevent oil leakage. For the seal on the rotating shaft 2, suitable housings can be provided on the inner edge of the bearing, to contain common oil seal rings.

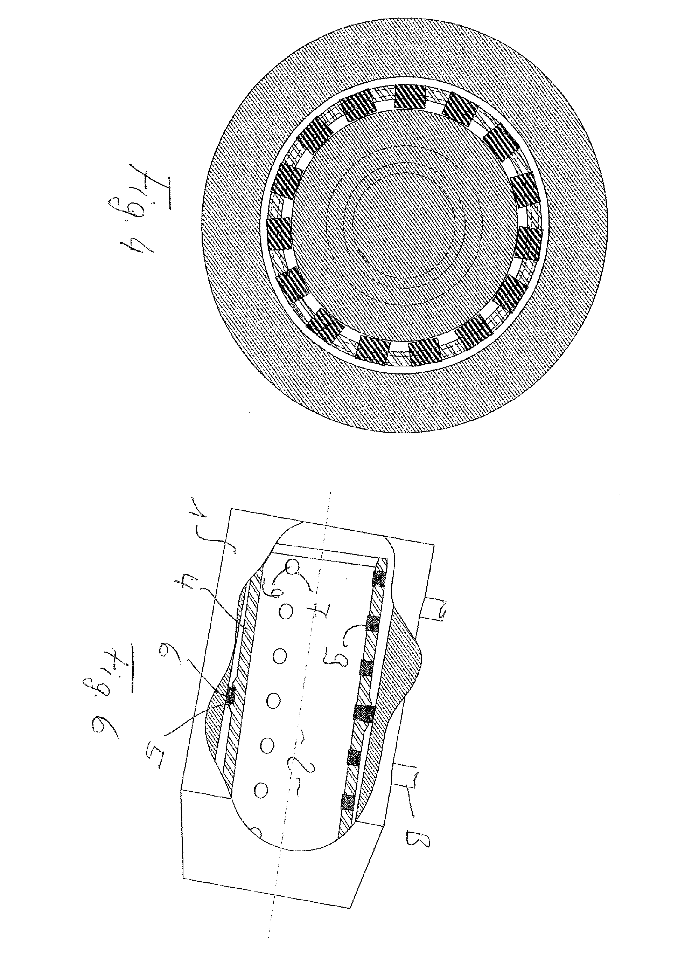

Fig. 6 shows a variant of the bearing according to the invention. According to this variant, the bearing has no staves 10, and the pins 9, according to the clearance with which they have been turned, help to maintain the shaft 2 concentric in the shell 4. Rotation of the shaft 2 creates, due to the presence of a film of lubricant (water and/or oil) present between the inner surface of the shell 4 and the shaft 2, a load-bearing supporting effect that in fact eliminates the load to which the pins 9 are subjected when the shaft is not rotating.

Therefore, during rotation the pins 9 help to maintain the bearing concentric, ensuring formation of the film also in the most critical initial start-up stage.

The central guiding strip 6 enables rotation of the bearing inside the housing 3. As the orientable bearing is supported only the centre, it has the advantage of having almost all of the outer surface of the shell 4 wetted by the water or oil, which drastically improves heat dispersion from the inside outwards, with benefits on the duration of the bearing.

The advantages achieved with the present invention are many. In fact, it solves the problem of premature wear of common sliding bearings caused by the alignment error between the rotary shaft or of the propeller shaft and supports or casings in which the bearings are housed.

The constant self-alignment of the bearing of the invention allows the bearing to operate perfectly parallel at all times to the surface of the propeller shaft 2. Therefore, the effective load of the operating shaft 2 on the inside of the self-aligning bearing is perfectly distributed on the whole of the length of the same bearing.

Angular orientation of the bearing is possible due to the thin guiding strip 6 housed in the radial groove 5 machined in the centre of the shell of the bearing. The thin and narrow guiding strip 6, with high compressive load capacity, maintains the shell of the bearing practically without any clearance inside the casing or in the support. The elasticity of the material with which the strip is made, the calculated minimum clearance of the groove housing the strip and the reduced length of the strip allow the whole bearing to be oriented inside the housing positioned constantly and at all times perfectly parallel to the propeller shaft 2. The technical solution constituted by the thin supporting band can be performed very rapidly and does not require particular precision during machining.

A further advantage of the present invention consists in the solution of the problems of assembly and extraction present in common sliding bearings. Due to the thin central strip 6, the bearing of the invention can be easily inserted in any pre-existing bearing housing.

The tolerances of the metal housings produced inside the supports 1 are not always correct and they are often scored and damaged due to the difficulty in extracting previous bearings seized inside. Therefore, the installation of new bearings in old housings requires a lengthy operation to repair the metal surfaces.

Vice versa, the central guiding strip 6 made of synthetic resin that characterises the bearing of the invention, in the case of housings with inner surfaces swollen by scoring, allows easy insertion and removal of the bearing; in the most difficult points in which the guiding strip 6 must be forced, sandpaper can be used to reduce the thickness thereof.

The invention offers a simple and effective solution to problems deriving from the alignment error between one support and the other of a rotating shaft or propeller shaft 2

In the case of errors in the concentricity of the supports that prevent insertion of the shaft 2 between one support and the other, the bearing of the invention can be used without the central guiding strip 6, inserting the propeller shaft 2 so that the bearing remains guided parallel to the axis that determines orientation thereof. The smaller outer diameter of the bearing with respect to the inner diameter of the housing allows the bearing to recover an eccentric error equal to the difference of the two diameters. The empty space is then filled by injecting liquid rubber between the outside of the shell of the bearing and the inside of the housing. Once the outer rubber has hardened, the bearing will remain perfectly aligned inside its housing.

The invention solves the problems of accidental damage found in common sliding bearings during assembly of the propeller shaft.

As the pins 9 made of acetal resin set along the body of the shell 4 project slightly towards the inside, they also have the function of protecting the inner surface of the bearing during insertion of the rotating shaft 2 along the bearing. In common metal bearings, insertion of the rotating shaft during assembly is a very delicate operation; frequently the edge of the shaft rubs and creates scoring and swelling of material inside the surface of the bearing, which causes malfunctioning such as overheating, seizing or flaking of material.

The invention solves the problems of maintenance and replacement of the staves present in common stave bearings.

As the acetal resin pins 9 set along the body of the shell 4 of the bearing of the invention in the version with staves 10 are turned with a diameter of a few tenths larger than that of the propeller shaft 2, this simplifies insertion of the propeller shaft 2. Therefore, the pins 9 maintain the shaft 2 concentric inside the support, allowing subsequent insertion and/or removal of the staves 10 with the rotary shaft 2 mounted.

The acetal resin pins 9 of the bearing of the invention in the version with staves contribute to supporting the rotating shaft; therefore when they are worn (in the case of late replacement of the worn staves) they can be replaced with new staves without requiring to replace the whole bearing.

Naturally, in place of the pins 9 it would also be possible to use equivalent delimiting and/or barrier elements, such as strips of anti-friction material or other equivalent means having the function of stop, secured by screws or other means to the body of the shell 4 of the bearing.

Therefore, the present invention is not limited to the embodiments illustrated and described, but comprises all those modifications and variants of embodiment falling within the broader scope of the inventive concept, substantially as claimed below.

## Claims

1. A self-aligning sliding bearing for rotating shafts (2) comprising a support element (1) provided with a cylindrical hole (3) for housing the bearing; a cylindrical shell (4) inserted with slight radial clearance in the hole (3) of said support element (1); said shell (4) being provided in the central part thereof with a circumferential groove (5) for housing a guiding strip (6) that rests with the outer perimeter thereof against the wall of the hole (3) of said support (1); said shell (4) also being provided with three or more rows of peripherally equidistant delimiting elements (9) aligned according to the directrices of said cylindrical shell (4), projecting radially from the inner wall of said shell (4) to rest against said rotating shaft (2), and means (11) in said shell (4) to prevent said shell (4) from rotating with respect to said support element (1).

2. The bearing according to claim 1, wherein said delimiting elements (9) are constituted by rows of pins, or other equivalent means having the function of stop.

3. The bearing according to claim 1, **characterised in that** it also comprises staves (10) constituted by strips with a rectangular or substantially rectangular section.

4. The bearing according to claim 3, wherein said staves (10) have a length greater than the length of said cylindrical hole (3) of said support element (1).

5. The bearing according to claim 3, wherein said staves (10) are inserted between said rows of pins (9), there being provided means at the bottom end of the shell (4) to form the front stop for said staves (10).

6. The bearing according to claim 5, wherein said front stop means are constituted by a circumferential row of pins (9).

7. The bearing according to any one of the preceding claims, wherein said pins (9) are constituted by cylinders made of suitable resins, said cylinders being provided at one end with a threaded part that is screwed into corresponding threaded holes (7,8) formed in said shell (4).

8. The bearing according to any one of the preceding claims, wherein both said staves (10) and said shell (4) are made of anti-friction materials, and for example in anti-friction metal or in anti-friction resins such as an acetal copolymer or other resins.

9. The bearing according to any one of the preceding claims, **characterised in that** it can also be used in oil bath or water supports (1).

10. The bearing according to claim 9, **characterised in that** said oil bath support (1) comprises on the outer part thereof an annular groove for housing an O-ring, there being provided on the rotating shaft (2) and/or on the inner edge of the cylindrical hole (3) appropriate housings to accommodate common oil seal rings.
